# EUROPEAN PATENT APPLICATION

(11) **EP 2 305 955 A2**
(43) Date of publication of application: **06.04.2011**
(21) Application number: 10170940.0
(22) Date of filing: 27.07.2010
(51) Int. Cl.: F01D 5/16, F01D 5/18

(54) **Aerofoil structure and corresponding turbomachine**

(30) Priority: 23.09.2009 GB 0916687
(71) Applicant: Rolls-Royce plc, London SW1E 6AT (GB)
(72) Inventor: Harron, Roy John, Bristol, South Gloucestershire BS32 9BT (GB)
(74) Representative: Roberts, Nicholas John

(57) **Abstract**

An aerofoil structure (2) comprising: a cavity (12), the cavity (12) having a viscoelastic material (14) disposed therein; and a temperature regulating means (16) for regulating the temperature of the viscoelastic material (14).

## Description

This invention relates to an aerofoil structure having a cavity filled with a viscoelastic material and a temperature regulator for regulating the temperature of the viscoelastic material, and particularly but not exclusively to an aerofoil structure wherein the temperature regulator maintains the viscoelastic material at an optimum damping temperature.

### Background

It is known to manufacture hollow metallic aerofoils for example to be used as blades in a jet engine, and in particular fan blades for a turbomachine, by superplastic forming and diffusion bonding metallic panels, the panels forming pressure and suction surfaces of the blade. Such structures are widely used in the civil aerospace industry, for example in wide-chord fan blades, and may also be used in blisks (i.e. bladed disks), particularly in military applications. The metallic panels may include elementary metal, metal alloys and metal matrix composites and at least one of the metallic panels must be capable of superplastic extension. In one known process the surfaces of the panels to be joined are cleaned, and at least one surface of one or more of the panels is coated in preselected areas with a stop-off material to prevent diffusion bonding. The panels are arranged in a stack and the edges of the panels are welded together, except where a pipe is welded to the panels, to form an assembly. The pipe enables a vacuum, or inert gas pressure, to be applied to the interior of the assembly. The assembly is placed in an autoclave and heated so as to "bake out" the binder from the material to prevent diffusion bonding. The assembly is then evacuated, using the pipe, and the pipe is sealed. The sealed assembly is placed in a pressure vessel and is heated and pressed to diffusion bond the panels together to form an integral structure. Diffusion bonding occurs when two mat surfaces are pressed together under temperature, time and pressure conditions that allow atom interchange across the interface. The first pipe is removed and a second pipe is fitted to the diffusion bonded assembly at the position where the first pipe was located. The integral structure is located between appropriately shaped dies and is placed within an autoclave. The integral structure and dies are heated and pressurised fluid is supplied through the second pipe into the interior of the integral structure to cause at least one of the panels to be superplastically formed to produce an article matching the shape of the dies.

In addition to the hollow assembly just described, it is also known to insert a membrane between the metallic panels prior to the above described process. The location of diffusion bonds between the membrane and the adjacent panels can be controlled by applying the stop-off material to preselected areas on each side of the membrane (or respective panels). When the aerofoil is subsequently expanded, the membrane adheres to the panels where the diffusion bond is allowed to form and thereby provides an internal structure. The internal structure is provided to increase the strength and stiffness of the aerofoil and also to prevent "panting" of the panels.

The assembly may be filled or part filled by a suitable material to provide damping of the structure and therefore to reduce vibration. A suitable material may be one which possesses viscoelastic properties. Viscoelasticity is a property of a solid or liquid which when deformed exhibits both viscous and elastic behaviour through the simultaneous dissipation and storage of mechanical energy. A known method is to introduce a viscoelastic material, for example a Huntsman™ syntactic damping paste or a similar product, into the cavity by injecting or otherwise introducing the material into some or all of the cavity.

Although the use of viscoelastic filled blades can produce large percentage drops in blade vibration levels, the amount of damping that can be achieved is highly dependent on the temperature of the viscoelastic material. Very high or very low temperatures can drastically reduce the damping levels possible and hence the amount of blade vibration reduction possible.

Viscoelastic materials have optimum damping properties when they are in their 'transition region', which is the temperature between their glassy state and rubbery state. This is also known as the glass transition temperature. In this region the viscoelastic material loss factor, which is directly proportional to damping level, can be significantly higher than at temperature extremes.

The typical operating temperature environment of military and civil fans can vary from very cold conditions (∼-40C) to hot conditions (∼150C). This operating temperature range results in the viscoelastic material damping being significantly reduced, and hence significantly higher blade vibration levels.

The present invention provides an aerofoil structure which maintains the viscoelastic material at the optimum damping temperature.

### Statements of Invention

According to a first aspect of the invention, there is provided an aerofoil structure comprising: a cavity, the cavity having a viscoelastic material disposed therein; and a temperature regulator for regulating the temperature of the viscoelastic material.

Temperature regulator may comprise a bleed air system.

The bleed air system may comprises one or more tubes which pass through the cavity and which are fluidically coupled to the exterior of the aerofoil structure.

The one or more tubes may be surrounded by the viscoelastic material.

The one or more tubes may be titanium or carbon fibre tubes.

The one or more tubes may receive bleed air from a later compressor stage to heat the viscoelastic material and/or from a pre-compressor stage to cool the viscoelastic material.

The bleed air may exit the one or more tubes through one or more holes in a tip or leading edge of the aerofoil structure.

The temperature regulator may comprise a heating element.

The heating element may be an electrical ceramic heating panel.

The heating element may be disposed within the cavity.

The heating element may be embedded in the viscoelastic material.

The temperature regulator may maintain the viscoelastic material at an optimum damping temperature.

The optimum damping temperature may be a glass transition temperature so that the viscoelastic material is in a transitional region between a glassy state and a rubbery state.

The aerofoil structure may be used in a turbomachine.

According to another aspect of the invention, there is provided an aerofoil structure comprising: a cavity, the cavity having a damping material disposed therein; and a temperature regulator for regulating the temperature of the damping material.

### Brief Description of the Drawings

For a better understanding of the present invention, and to show more clearly how it may be carried into effect, reference will now be made, by way of example, to the accompanying drawings, in which:
Figure 1 is a cross-section through an aerofoil structure in accordance with a first embodiment of the invention;
Figure 2 is a cross-section through the line A-A shown in Figure 1; and
Figure 3 is a cross-section similar to Figure 2 through an alternative embodiment of the invention.

### Detailed description

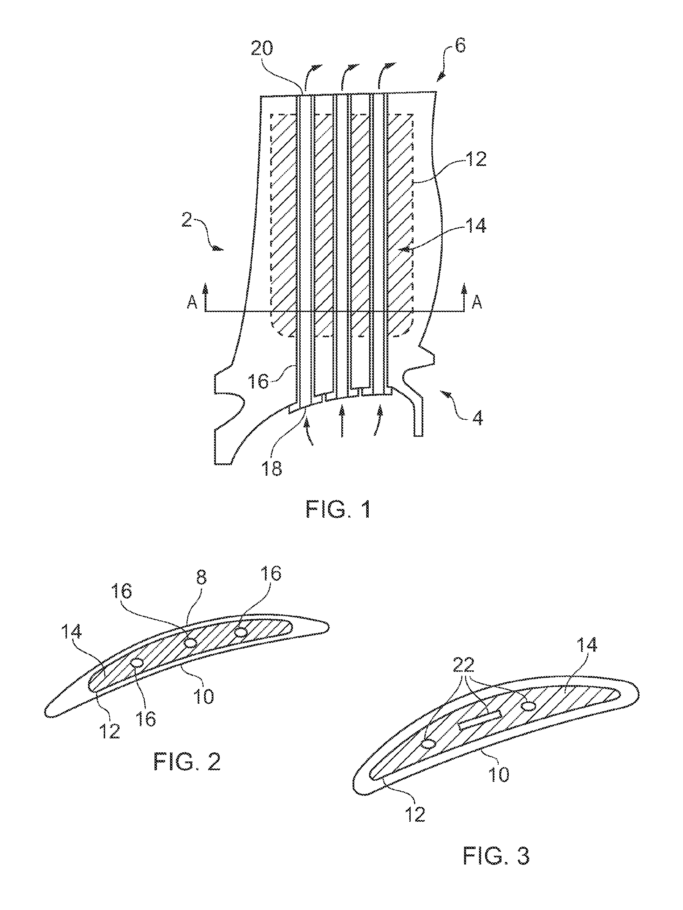

Figure 1 shows a cross-section through an aerofoil structure 2 in accordance with a first embodiment of the invention. The aerofoil structure 2 extends from a root end 4, where it is secured to a hub or disk, to a tip end 6. The aerofoil structure 2 comprises a first panel 8 and a second panel 10, as shown in Figure 2. The first and second panels 8, 10 are diffusion bonded and superplastically formed, as described previously, to form a hollow cavity 12 disposed therebetween. The cavity 12 is filled with a viscoelastic material 14.

The aerofoil structure 2 further comprises a temperature regulating means consisting of one or more tubes 16 which pass through the cavity 12 and which are fluidically coupled to the exterior of the aerofoil structure 2. The tubes 16 have an inlet 18 at the root end 4 of the aerofoil structure 2 and an outlet 20 at the tip end 6 of the aerofoil structure 2. As shown in Figure 2, the tubes 16 are surrounded by the viscoelastic material 14 within the cavity 12. The tubes 16 may be formed from titanium, carbon fibre or another suitable material.

In use, the tubes 16 are fed with recycled bleed air from another part of the turbomachine through the inlets 18, as indicated by the arrows. The air may be hot air from a later compressor stage or may be cool air from a pre-compressor stage. Alternatively, these air supplies may be mixed to provide bleed air of the desired temperature. The bleed air passes through the tubes 16 and depending on the relative temperature of the viscoelastic material, either radiate or absorb heat from the viscoelastic material as the air passes through the portions of the tubes 16 in the cavity 12. The air subsequently exits the tubes 16 via the outlets 20.

On exiting the tubes 16 via the outlets 20, the bleed air is introduced into the airstream, as indicated by the arrows in Figure 1. Alternatively, the bleed air may exit through outlets in a trailing edge of the aerofoil structure 2. The outlets 20 may be small holes and although shown at the blade tip in the present embodiment they can also be located on one or more of the leading edge, trailing edge or blade panel surfaces. The introduction of the bleed air into the airstream may provide a number of aerodynamic advantages, such as increased flow stability.

In an alternative embodiment shown in Figure 3, the temperature regulator is provided by an electrical heating element 22, such as a ceramic electrical heating panel or other similar device. In use, the heating element is placed within the cavity 12 in the aerofoil structure 2 and surrounded by the viscoelastic material 14. An electrical current is passed through the heating element which, as a result, generates heat that is conducted into the viscoelastic material.

In a third embodiment, the heating element of the second embodiment may be combined with the tubes 18 of the first embodiment. The tubes 18 may be used solely for providing cooler air in this instance. This combination is particularly beneficial since the heating element may be used before the turbomachine is started so that the viscoelastic material 14 is at the optimum damping temperature throughout operation. Both the first and second embodiments may be provided with a control system which provides feedback from the viscoelastic material 14. One or more temperature sensors may be located within the viscoelastic material which provide real-time temperature readings to the control system. The control system uses the temperature readings to control the temperature regulating means in order to maintain the viscoelastic material at the optimum damping temperature, which may be preset in the control system. In the first embodiment this may be achieved by supplying bleed air from a different location in the turbomachine or mixing air from two different locations. In the second embodiment this may be achieved by altering the current passing through the heating element. In the third embodiment this may be achieved by either controlling the temperature of the heating element or the temperature of the bleed air in the manner described above.

The possible level of vibration reduction from the use of the present invention is significant. With a standard viscoelastic filled aerofoil structure (with no temperature regulation means) one can expect approximately a 20% reduction in vibration of the fundamental modes, and a 60% reduction for higher modes, on average under normal operating conditions. Using the present invention, a continuous vibration reduction of approximately 65% in the fundamental modes and 95% reduction in the higher modes may be achieved.

Due to the constant operating conditions, the invention allows the use of viscoelastic materials with a narrower but higher loss factor curve and more suitable modulus values, which would further improve damping. In addition, the decreased temperature range allows the use of materials with improved mechanical properties, such as strength and creep properties. With the use of the invention the vibration reduction would be achieved irrespective of the aircraft operating temperature conditions.

The present invention may be applied to other viscoelastic damping systems where the operating temperature range is large and it is desired to maintain the viscoelastic material at an optimum damping temperature. By operating at the optimum damping temperature the reduced vibrations permit the blades to be made of less physically strong material which may be lighter than the conventional material of manufacture. Beneficially, the reduced weight leads to an overall engine weight reduction and concomitant reduced fuel burn and environmental impact.

In a turbomachine, the present invention may be applied to both static, i.e. stator blades, and rotating components, i.e. fan blades. The embodiments are exemplary and may be modified by, for example, varying the number or type of temperature regulating means, the type of viscoelastic material etc. It is also possible to mix the types of temperature regulating means.

## Claims

1. An aerofoil structure comprising:
a cavity (12), the cavity having a viscoelastic material (14) disposed therein; and
**characterised in that** the structure comprises a temperature regulator (16) for regulating the temperature of the viscoelastic material.

2. An aerofoil structure as claimed in claim 1, wherein the temperature regulator comprises a bleed air system.

3. An aerofoil structure as claimed in claim 2, wherein the bleed air system comprises one or more tubes which pass through the cavity and which are fluidically coupled to the exterior of the aerofoil structure.

4. An aerofoil structure as claimed in claim 2 or 3, wherein the one or more tubes are surrounded by the viscoelastic material.

5. An aerofoil structure as claimed in any one of claims 2 to 4, wherein the one or more tubes are titanium or carbon fibre tubes.

6. An aerofoil structure as claimed in any of claims 2 to 5, wherein the one or more tubes receive bleed air from a later compressor stage to heat the viscoelastic material and/or from a pre-compressor stage to cool the viscoelastic material.

7. An aerofoil structure as claimed in claim 6, wherein the bleed air exits the one or more tubes through one or more holes in a tip (6) or leading or trailing edge of the aerofoil structure.

8. An aerofoil structure as claimed in any one of the preceding claims, wherein the temperature regulator comprises a heating element (22).

9. An aerofoil structure as claimed in claim 8, wherein the heating element is an electrical ceramic heating panel.

10. An aerofoil structure as claimed in claim 8 or 9, wherein the heating element is disposed within the cavity.

11. An aerofoil structure as claimed in any one of claims 8 to 10, wherein the heating element (22) is embedded in the viscoelastic material.

12. An aerofoil structure as claimed in any one of the preceding claims, wherein the temperature regulator maintains the viscoelastic material at an optimum damping temperature.

13. An aerofoil structure as claimed in claim 12, wherein the optimum damping temperature is a glass transition temperature so that the viscoelastic material is in a transitional region between a glassy state and a rubbery state.

14. A turbomachine having an aerofoil structure as claimed in any one of the preceding claims.
